# EUROPEAN PATENT APPLICATION

(11) **EP 4 819 234 A1**
(43) Date of publication of application: **07.10.2026**
(21) Application number: 25714461.8
(22) Date of filing: 21.02.2025
(51) Int. Cl.: H01M 4/36

(54) **POSITIVE ELECTRODE MATERIAL, AND PREPARATION METHOD THEREFOR AND USE THEREOF**

(30) Priority: 19.02.2025 CN 202510186601
(71) Applicant: Hubei Wanrun New Energy Technology Co., Ltd., Shiyan, Hubei 442500 (CN)
(72) Inventor: WANG, Qin, Shiyan, Hubei 442500 (CN); JIANG, Xuelin, Shiyan, Hubei 442500 (CN); LIU, Haiyan, Shiyan, Hubei 442500 (CN); LV, Fei, Shiyan, Hubei 442500 (CN); WANG, Wei, Shiyan, Hubei 442500 (CN)
(74) Representative: Manitz Finsterwald Patent- und Rechtsanwaltspartnerschaft mbB
(86) International application number: PCT/CN2025/078433
(87) International publication number: WO 2026/174519

(57) **Abstract**

The present application provides a cathode material, a preparation method and application thereof, which belongs to the field of lithium-ion battery technology. The cathode material includes a first core particle and a first coating layer covering a surface of the first core particle. The first core particle is represented by a chemical formula of LiₐFe_{b}TiAl_{c}(PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c). The cathode material of the embodiment of the present application can simultaneously achieve high capacity and high compaction density.

## Description

### TECHNICAL FIELD

The present application relates to the field of lithium-ion battery technology, specifically to a cathode material, a preparation method thereof, and application thereof.

### BACKGROUND

Lithium iron phosphate batteries, as a type of power battery, are known for their remarkable safety, long lifespan, and excellent charging performance. They are widely used in new energy vehicles. As the demand grows for lithium-ion batteries with longer driving ranges, there is a need for cathode active materials with higher compaction density to enhance the mass energy density and volumetric energy density of lithium iron phosphate batteries. Conventional methods to increase the compaction density of lithium iron phosphate materials often result in a reduction in capacity of the lithium iron phosphate materials. As a result, enhancing the capacity of the lithium iron phosphate materials through doping has become a common practice. However, common metal dopants can hinder the growth of lithium iron phosphate crystals, leading to lower compaction density of the lithium iron phosphate materials. Thus, conventional lithium iron phosphate cathode materials face a challenge in simultaneously achieving high capacity and high compaction density.

### SUMMARY

In view of the technical issues existing in the background, the present application provides a cathode material, a preparation method thereof, and application thereof, aiming to address the technical issue that conventional lithium iron phosphate cathode materials cannot simultaneously have high capacity and high compaction density.

In a first aspect, an embodiment of the present application provides a cathode material, the cathode material includes a first core particle and a first coating layer covering a surface of the first core particle. The first core particle is represented by a chemical formula of LiₐFe_{b}TiAl((PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c).

In the technical solution of the embodiment of the present application, the doping elements in the first core particle of the cathode material are trivalent titanium and aluminum. Compared with conventional cathode materials doped with tetravalent titanium, trivalent titanium has a larger ionic radius, making it easier to dope at the iron site. Additionally, the trivalent titanium doping does not require a reduction reaction, and thus can be performed at a lower temperature. As a result, trivalent titanium can exhibit better doping effect, and titanium can be diffused more uniformly. By co-doping the cathode material with aluminum and trivalent titanium, the compaction density can be increased while enhancing the ionic conductivity and capacity of the cathode material. Thus, the cathode material of the embodiment of the present application can simultaneously achieve high capacity and high compaction density.

In some embodiments, the cathode material has a compaction density in a range from 2.45 g/cm³ to 2.6 g/cm³.

In these embodiments, the compaction density of the cathode material within the above range is beneficial for improving the energy density of the cathode material.

In some embodiments, a mass percentage of the carbon layer in the cathode material is in a range from 0.7% to 2.3%.

In these embodiments, the above range of the mass percentage of the carbon layer in the cathode material is beneficial for improving the electronic conductivity of the cathode material.

In a second aspect, an embodiment of the present application provides a method for preparing a cathode material, including the following steps:
subjecting a titanium source, a first lithium source, and a phosphorus source to a first reaction treatment to obtain a preliminary material;
subjecting the preliminary material and an aluminum source to a second reaction treatment to obtain a lithium titanium phosphate material;
subjecting the lithium titanium phosphate material, an iron source, a second lithium source, and a carbon source to a third reaction treatment to obtain the cathode material;
wherein a valence of titanium element in the titanium source is +3, the cathode material includes a first core particle and a first coating layer covering a surface of the first core particle, the first core particle is represented by a chemical formula of LiₐFe_{b}TiAl_{c}(PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c).

In the technical solution of the embodiment of the present application, the preliminary material is first obtained by reacting the titanium source, the first lithium source, and the phosphorus source through the first reaction treatment. Then, the preliminary material and the aluminum source undergo the second reaction treatment to obtain the lithium titanium phosphate material. The lithium titanium phosphate material including two doping elements, trivalent titanium and aluminum, has high activity, high purity, and small primary particle size, which facilitates doping during the subsequent third reaction treatment. Additionally, by introducing trivalent titanium, which has a larger ionic radius compared to tetravalent titanium, it is easier to dope at the iron site. Moreover, the trivalent titanium doping does not require a reduction reaction, and thus can be performed at a lower temperature. Thus, the trivalent titanium exhibits better doping effect, and titanium can be diffused more uniformly. By co-doping the cathode material with aluminum and trivalent titanium, the compaction density can be increased while enhancing the ionic conductivity and capacity of the cathode material. Thus, the cathode material prepared by the method for preparing the cathode material of the embodiment of the present application can simultaneously achieve high capacity and high compaction density.

In some embodiments, the lithium titanium phosphate material includes a second core particle and a second coating layer covering a surface of the second core particle. The second core particle is represented by a chemical formula of Li₃Ti(PO₄)₂, and the second coating layer includes aluminum element.

In these embodiments, the lithium titanium phosphate material reacts with the second lithium source, the iron source, and the carbon source to obtain the cathode material, which not only introduces titanium and aluminum elements but also supplements lithium element and phosphate groups, thereby contributing to improving the compaction density and capacity of the cathode material.

In some embodiments, in a mixture of the titanium source, the first lithium source, and the phosphorus source, a ratio of amount of substance of titanium element, lithium element, and phosphorus element is 1:(3.2 to 3.8):(2.1 to 2.5).

In these embodiments, maintaining the ratio of amount of substance of the titanium element, the lithium element, and the phosphorus element in the mixture of the titanium source, the first lithium source, and the phosphorus source at 1:(3.2 to 3.8):(2.1 to 2.5) is beneficial for obtaining a second core particle with an appropriate ratio of amount of substance of the various elements. This results in a lithium titanium phosphate material with an appropriate ratio of amount of substance of the various elements, thereby contributing to improving the compaction density and capacity of the cathode material.

In some embodiments, a ratio of amount of substance of titanium element in the preliminary material to aluminum element in the aluminum source is 1:(0.1 to 0.2).

In these embodiments, maintaining the ratio of amount of substance of the titanium element in the preliminary material to the aluminum element in the aluminum source within the range of 1:(0.1 to 0.2) is beneficial for obtaining a lithium titanium phosphate material with appropriate doping amounts of the titanium element and the aluminum element, and thus obtaining a cathode material with appropriate doping amounts of the titanium element and the aluminum element, which is beneficial for balancing the capacity and compaction density of the cathode material.

In some embodiments, a ratio of amount of substance of titanium element in the lithium titanium phosphate material, iron element in the iron source, lithium element in the second lithium source, and carbon element in the carbon source is 1:(5 to 10):(5.2 to 11):(12 to 36).

In these embodiments, maintaining the ratio of amount of substance of the titanium element in the lithium titanium phosphate material, the iron element in the iron source, the lithium element in the second lithium source, and the carbon element in the carbon source within the range of 1:(5 to 10):(5.2 to 11):(12 to 36) is beneficial for obtaining a cathode material with appropriate ratio of amount of substance of the various elements, which is beneficial for balancing the capacity and compaction density of the cathode material.

In some embodiments, a temperature of the first reaction treatment is in a range from 200 °C to 350 °C.

In some embodiments, a pressure of the first reaction treatment is in a range from 10 MPa to 20 MPa.

In some embodiments, a time period of the first reaction treatment is in a range from 5 hours (h) to 15 h.

In these embodiments, maintaining the temperature within the range from 200 °C to 350 °C, the pressure within the range from 10 MPa to 20 MPa, and the time period within the range from 5 h to 15 h for the first reaction treatment is beneficial for obtaining the preliminary material from the titanium source, the first lithium source, and the phosphorus source through the first reaction treatment.

In some embodiments, the titanium source includes titanium trichloride.

In these embodiments, the titanium source includes titanium trichloride. Compared to conventional cathode materials doped with tetravalent titanium, trivalent titanium has a larger ionic radius, making it easier to dope at the iron site. Additionally, the trivalent titanium doping does not require a reduction reaction, and thus can be performed at a lower temperature, resulting in better doping effect and more uniform titanium diffusion.

In some embodiments, the first lithium source includes at least one of lithium hydroxide, lithium oxide, lithium dihydrogen phosphate, and lithium monohydrogen phosphate.

In some embodiments, the phosphorus source includes at least one of lithium dihydrogen phosphate and lithium monohydrogen phosphate.

In some embodiments, the iron source includes ferric phosphate.

In these embodiments, adopting the above first lithium source, phosphorus source, and iron source can reduce the introduction of impurities, which is beneficial for preparing a high-purity preliminary material and, subsequently, a high-purity cathode material.

In some embodiments, the second lithium source includes at least one of lithium carbonate, lithium hydroxide, lithium oxalate, and lithium acetate.

In these embodiments, adopting the above second lithium source can reduce the introduction of impurities, which is beneficial for preparing a high-purity cathode material.

In some embodiments, the step of subjecting the titanium source, the first lithium source, and the phosphorus source to the first reaction treatment further includes adding a reducing agent.

In these embodiments, in the step of subjecting the titanium source, the first lithium source, and the phosphorus source to the first reaction treatment, the reducing agent is added to prevent the oxidation of trivalent titanium during the reaction.

In some embodiments, a ratio of amount of substance of the reducing agent to titanium element in the titanium source is (0.1 to 0.2):1.

In these embodiments, maintaining the ratio of amount of substance of the reducing agent to the titanium element in the titanium source within the above range is beneficial for sufficiently preventing the oxidation of trivalent titanium during the reaction.

In some embodiments, the reducing agent includes at least one of hydrazine hydrate, sodium sulfite, and hypophosphorous acid.

In these embodiments, adopting the above reducing agent can reduce the introduction of impurities, which is beneficial for preparing a high-purity cathode material.

In some embodiments, the step of subjecting the preliminary material and the aluminum source to the second reaction treatment includes following steps:
mixing the preliminary material, a dispersant, and the aluminum source to form a first slurry, and adjusting a pH value of the first slurry to 8 to 10;
subjecting the first slurry to solid-liquid separation to obtain a solid product;
subjecting the solid product to a first calcination treatment to obtain the lithium titanium phosphate material.

In these embodiments, a lithium titanium phosphate material with high activity, high purity, and small primary particle size can be prepared through the above second reaction treatment, which is beneficial for uniform mixing of raw materials during the subsequent third reaction treatment, thereby improving the uniform distribution of titanium element and aluminum element in the first core particle, which is further beneficial for improving the compaction density and capacity of the cathode material.

In some embodiments, the step of subjecting the lithium titanium phosphate material, the iron source, the second lithium source, and the carbon source to the third reaction treatment to obtain the cathode material includes following steps:
mixing the lithium titanium phosphate material, the iron source, the second lithium source, and the carbon source to form a second slurry;
grinding the second slurry until a particle size of particles in the second slurry ranges from 300 nm to 600 nm;
subjecting the second slurry to solid-liquid separation to obtain a mixed material;
subjecting the mixed material to a second calcination treatment to obtain the cathode material.

In these embodiments, in the above step of third reaction treatment, by mixing the lithium titanium phosphate material, the iron source, the second lithium source, and the carbon source to form the second slurry, and grinding the second slurry until the particle size of the particles in the second slurry ranges from 300 nm to 600 nm, the raw materials can be uniformly mixed and thoroughly contact with each other, so that the titanium element and the aluminum element can be more uniformly distributed in the first core particle of the cathode material during the second calcination treatment, which is beneficial for improving the compaction density and capacity of the cathode material.

In some embodiments, a calcination temperature of the second calcination treatment is in a range from 700 °C to 850 °C.

In some embodiments, a calcination time period of the second calcination treatment is in a range from 6 h to 15 h.

In these embodiments, maintaining the calcination temperature of the second calcination treatment within the range from 700 °C to 850 °C and the calcination time period within the range from 6 h to 15 h are beneficial for obtaining the cathode material from the mixed material through the second calcination treatment.

In a third aspect, an embodiment of the present application provides a cathode plate, including a current collector and an active layer disposed on a surface of the current collector. The active layer includes the cathode material described in any of the above embodiments or the cathode material prepared by the method for preparing the cathode material described in any of the above embodiments.

In these embodiments, the cathode plate includes the above-described cathode material, thus having good electrochemical performance.

In a fourth aspect, an embodiment of the present application provides a secondary battery, including the above-described cathode plate.

In these embodiments, the secondary battery includes the above-described cathode plate, thus possessing comprehensively improved electrochemical performance, making it suitable for various application scenarios.

The above description is merely a summary of the technical solutions of the present application. In order to clearly illustrate the technical solutions of the present application for implementation according to the contents of the specification, as well as to make the above and other objectives, features, and advantages of the present application more apparent and comprehensible, specific embodiments of the present application are described below.

### BRIEF DESCRIPTION OF THE DRAWINGS

In order to clearly illustrate the technical solutions of the present application, the drawings used in the present application will be briefly described below. Apparently, the drawings described below are merely for some embodiments of the present application. For those of ordinary skill in the art, other drawings can be obtained according to the disclosed drawings without any creative effort.
FIG. 1 shows a flowchart of a method for preparing a cathode material according to an embodiment of the present application.
FIG. 2 shows a scanning electron microscope (SEM) result image of a cathode material provided in Example 1 of the present application.

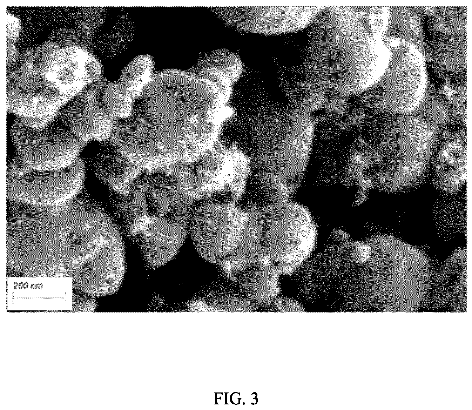

FIG. 3 shows a SEM result image of a cathode material provided in Example 2 of the present application.

### DETAILED DESCRIPTION

The embodiments of the technical solutions of the present application will be described more comprehensively below in conjunction with the accompanying drawings. The embodiments below are only for clearly illustrating the technical solutions of the present application, and thus are merely examples rather than limitations on the patent protection scope of the present application.

Unless otherwise defined, all technical and scientific terms used herein have the same meaning as commonly understood by those of ordinary skill in the art to which the present application pertains. The terms used in the specification of the present application herein are for the purpose of describing specific embodiments only and are not intended to limit the present application. The terms "comprise", "have", and any variations thereof in the specification, claims, and the above drawing description of the present application are intended to encompass non-exclusive inclusions.

The technical terms "first" and "second" mentioned in the description of the embodiments of the present application are merely used for distinguishing different objects, and cannot be construed as indicating or implying a relative importance, or implicitly specifying the number, specific order or primary-secondary relationship of the indicated technical features. In the description of the embodiments of the present application, "a plurality of" means two or more, unless otherwise defined explicitly and specifically.

The term "embodiment" means that specific features, structures, or characteristics described with reference to the embodiment can be included in at least one embodiment of the present application. The term "embodiment" appeared in various places in the specification does not necessarily refer to the same embodiment or an independent or alternative embodiment that is mutually exclusive of other embodiments. It can be explicitly and implicitly understood by those skilled in the art that the embodiment described herein can be combined with other embodiments.

The term "and/or" in the description of the embodiments of the present application merely describes a relationship between associated objects, indicating that three types of relationships may exist. For example, A and/or B can indicate three situations: only A exists, both A and B exist, and only B exists. In addition, the character "/" herein generally represents that the former and latter associated objects are in an "or" relationship.

The term "multiple" in the description of the embodiments of the present application means two or more. Similarly, "multiple groups" means two or more groups, and "multiple pieces" means two or more pieces.

In the description of the embodiments of the present application, the terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. indicate the orientations or positional relationships on the basis of the drawings. These terms are only for describing the present application and simplifying the description, rather than indicating or implying that the related devices or elements must have the specific orientations, or be constructed or operated in the specific orientations, and therefore cannot be understood as limitations of the present application.

In the description of the embodiments of the present application, unless otherwise clearly specified and defined, the terms "installed", "connected", "coupled", "fixed" and the like should be interpreted broadly. For example, they can be fixedly connected, detachably connected, or integrated, can be mechanically connected or electrically connected, can be directly connected or connected via an intermediate element, and can describe internal communication or interaction relationship between two elements. For those of ordinary skill in the art, the specific meaning of the above-mentioned terms in the embodiments of the present application can be understood according to specific circumstances.

As the demand grows for lithium-ion batteries with longer driving ranges, there is a growing need for cathode active materials with higher compaction density to enhance the mass energy density and volumetric energy density of lithium iron phosphate batteries. Conventional methods to increase the compaction density of lithium iron phosphate materials often result in a reduction in capacity of the lithium iron phosphate materials. As a result, enhancing the capacity of the lithium iron phosphate materials through doping has become a common practice. However, common metal dopants can hinder the growth of lithium iron phosphate crystals, leading to lower compaction density of the lithium iron phosphate materials. Thus, conventional lithium iron phosphate cathode materials face a challenge in simultaneously achieving high capacity and high compaction density.

To address the technical issue that lithium iron phosphate cathode materials are difficult to simultaneously have high capacity and high compaction density, the present application provides a cathode material, a preparation method thereof, a cathode plate, a secondary battery, and an electrical device. By co-doping the cathode material with trivalent titanium and aluminum, the cathode material can simultaneously achieve high capacity and high compaction density, thereby improving the electrochemical performance of the cathode plate and the secondary battery.

In a first aspect, an embodiment of the present application provides a cathode material. The cathode material includes a first core particle and a first coating layer covering a surface of the first core particle. The first core particle is represented by a chemical formula of LiₐFe_{b}TiAl_{c}(PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c).

In the technical solution of the embodiment of the present application, the doping elements in the first core particle of the cathode material are trivalent titanium and aluminum. Compared with conventional cathode materials doped with tetravalent titanium, trivalent titanium has a larger ionic radius, making it easier to dope at the iron site. Additionally, the trivalent titanium doping does not require a reduction reaction, and thus can be performed at a lower temperature. As a result, trivalent titanium can exhibit better doping effect, and titanium can be diffused more uniformly. By co-doping the cathode material with aluminum and trivalent titanium, the compaction density can be increased while enhancing the ionic conductivity and capacity of the cathode material. Thus, the cathode material of the embodiment of the present application can simultaneously achieve high capacity and high compaction density.

Optionally, a = 7.5, 8.0, 8.5, 9, 9.5, 10, 10.5, 11, 11.5, 12, 12.5, 13, 13.5, 14, or 14.5, or a can be within a range between any two of these values.

Optionally, b = 5.0, 5.5, 6, 6.5, 7, 7.5, 8.0, 8.5, 9, 9.5, or 10.0, or b can be within a range between any two of these values.

Optionally, c = 0.10, 0.11, 0.12, 0.13, 0.14, 0.15, 0.16, 0.17, 0.18, 0.19, or 0.20, or c can be within a range between any two of these values.

Optionally, d=a/3+1.02×(2/3b+1+c), a/3+1.025×(2/3b+1+c), a/3+1.03×(2/3b+1+c), a/3+1.035×(2/3b+1+c), a/3+1.04×(2/3b+1+c), a/3+1.045×(2/3b+1+c), or a/3+1.05×(2/3b+1+c), or d can be within a range between any two of these values.

In some embodiments, 7.2≤d≤13.

Optionally, d = 7.2, 7.3, 8, 8.5, 9, 9.6, 10, 10.3, 10.5, 11, 12, 12.3, or 13, or d can be within a range between any two of these values.

In some embodiments, the compaction density of the cathode material is in a range from 2.45 g/cm³ to 2.6 g/cm³.

In these embodiments, the compaction density of the cathode material within the above range is beneficial for improving the capacity and energy density of the cathode material. Optionally, the compaction density of the cathode material is 2.45 g/cm³, 2.48 g/cm³, 2.5 g/cm³, 2.52 g/cm³, 2.55 g/cm³, 2.58 g/cm³, or 2.60 g/cm³. Alternatively, the compaction density of the cathode material can be within a range between any two of these compaction densities.

In some embodiments, the BET specific surface area of the cathode material is in a range from 7.6 m²/g to 16.8 m²/g.

In these embodiments, the BET specific surface area of the cathode material within the above range is beneficial for enhancing the reaction activity of the cathode material, thereby improving the capacity and charge-discharge rate of the cathode material. Optionally, the BET specific surface area of the cathode material is in a range from 9.87 m²/g to 14.9 m²/g. Further optionally, the BET specific surface area of the cathode material is 9.87 m²/g, 10 m²/g, 11 m²/g, 12 m²/g, 13 m²/g, 14 m²/g, or 14.9 m²/g. Alternatively, the BET specific surface area of the cathode material can be within a range between any two of these BET specific surface areas.

In some embodiments, the pH value of the cathode material is in a range from 8.03 to 9.86.

In these embodiments, the pH value of the cathode material within the above range is beneficial for improving the charge-discharge efficiency and cycle life of the cathode material. Optionally, the pH value of the cathode material is in a range from 8.38 to 9.48. Further optionally, the pH value of the cathode material is 8.38, 8.4, 8.6, 8.8, 9, 9.2, 9.4, or 9.48. Alternatively, the pH value of the cathode material can be within a range between any two of these pH values.

In some embodiments, the powder resistivity of the cathode material is in a range from 10.3 Ω·cm to 369.7 Ω·cm.

In these embodiments, the powder resistivity of the cathode material within the above range is beneficial for improving the capacity and rate performance of the cathode material. Optionally, the powder resistivity of the cathode material is in a range from 8.9 Ω·cm to 26.8 Ω·cm. Further optionally, the powder resistivity of the cathode material is 8.9 Ω·cm, 9 Ω·cm, 12 Ω·cm, 16 Ω·cm, 20 Ω·cm, 22 Ω·cm, 24 Ω·cm, 26 Ω·cm, or 26.8 Ω·cm. Alternatively, the powder resistivity of the cathode material can be within a range between any two of these powder resistivities.

In some embodiments, the tap density of the cathode material is in a range from 0.89 g/mL to 1.09 g/mL.

In these embodiments, the tap density of the cathode material within the above range is beneficial for improving the energy density of the cathode material. Optionally, the tap density of the cathode material is in a range from 0.99 g/mL to 1.05 g/mL. Further optionally, the tap density of the cathode material is 0.99 g/mL, 1 g/mL, 1.01 g/mL, 1.02 g/mL, 1.03 g/mL, 1.04 g/mL, or 1.05 g/mL. Alternatively, the tap density of the cathode material can be within a range between any two of these tap densities.

In some embodiments, the D10 particle size of the cathode material is in a range from 0.32 µm to 0.69 µm.

In some embodiments, the D50 particle size of the cathode material is in a range from 0.97 µm to 1.55 µm.

In some embodiments, the D90 particle size of the cathode material is in a range from 7.66 µm to 19.57 µm.

It can be understood that the D10 particle size refers to a corresponding particle size when the cumulative particle size distribution of the cathode material reaches 10%, meaning that the proportion of particles smaller than the D10 particle size reaches 10%; D50 particle size refers to a corresponding particle size when the cumulative particle size distribution of the cathode material reaches 50%, meaning that the proportion of particles smaller than the D50 particle size reaches 50%; D90 particle size refers to a corresponding particle size when the cumulative particle size distribution of the cathode material reaches 90%, meaning that the proportion of particles smaller than the D90 particle size reaches 90%.

In these embodiments, the D10, D50, and D90 particle sizes of the cathode material within the above ranges are suitable and beneficial for improving the capacity and compaction density of the cathode material. Optionally, the D10 particle size of the cathode material is in a range from 0.46 µm to 0.68 µm. Further, the D10 particle size of the cathode material can be 0.46 µm, 0.5 µm, 0.52 µm, 0.54 µm, 0.56 µm, 0.58 µm, 0.6 µm, 0.64 µm, or 0.68 µm. Alternatively, the D10 particle size of the cathode material can be within a range between any two of these D10 particle sizes. Optionally, the D50 particle size of the cathode material is in a range from 1.11 µm to 1.48 µm. Further, the D50 particle size of the cathode material can be 1.11 µm, 1.15 µm, 1.2 µm, 1.25 µm, 1.3 µm, 1.35 µm, 1.4 µm, or 1.48 µm. Alternatively, the D50 particle size of the cathode material can be within a range between any two of these D50 particle sizes. Optionally, the D90 particle size of the cathode material is in a range from 9.36 µm to 13.47 µm. Further, the D90 particle size of the cathode material can be 9.36 µm, 9.5 µm, 10 µm, 10.5 µm, 11 µm, 11.5 µm, 12 µm, 12.5 µm, 13 µm, or 13.47 µm. Alternatively, the D90 particle size of the cathode material can be within a range between any two of these D90 particle sizes.

In some embodiments, the mass percentage of the carbon layer in the cathode material is in a range from 0.7% to 2.3%.

In these embodiments, the above range of the mass percentage of the carbon layer in the cathode material is beneficial for improving the electronic conductivity of the cathode material. Optionally, the mass percentage of the carbon layer in the cathode material is in a range from 1.02% to 1.87%. Further optionally, the mass percentage of the carbon layer in the cathode material can be 1.02%, 1.1%, 1.2%, 1.3%, 1.4%, 1.5%, 1.6%, 1.7%, 1.8%, or 1.87%. Alternatively, the mass percentage of the carbon layer in the cathode material can be within a range between any two of these mass percentages.

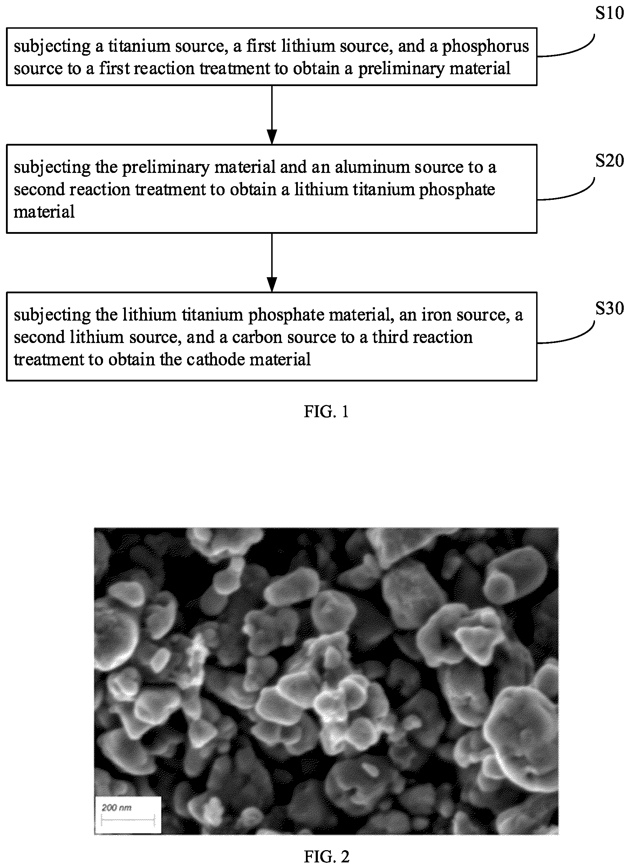

Referring to FIG. 1, in a second aspect, an embodiment of the present application provides a method for preparing a cathode material, including the following steps:
S10: subjecting a titanium source, a first lithium source, and a phosphorus source to a first reaction treatment to obtain a preliminary material;
S20: subjecting the preliminary material and an aluminum source to a second reaction treatment to obtain a lithium titanium phosphate material;
S30: subjecting the lithium titanium phosphate material, an iron source, a second lithium source, and a carbon source to a third reaction treatment to obtain the cathode material.

A valence of titanium element in the titanium source is +3, the cathode material includes a first core particle and a first coating layer covering a surface of the first core particle, the first core particle is represented by a chemical formula of LiₐFe_{b}TiAl_{c}(PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c).

In the technical solution of the embodiment of the present application, the preliminary material is first obtained by reacting the titanium source, the first lithium source, and the phosphorus source through the first reaction treatment. Then, the preliminary material and the aluminum source undergo the second reaction treatment to obtain the lithium titanium phosphate material. The lithium titanium phosphate material including two doping elements, trivalent titanium and aluminum, has high activity, high purity, and small primary particle size, which facilitates doping during the subsequent third reaction treatment. Additionally, by introducing trivalent titanium, which has a larger ionic radius compared to tetravalent titanium, it is easier to dope at the iron site. Moreover, the trivalent titanium doping does not require a reduction reaction, and thus can be performed at a lower temperature. Thus, the trivalent titanium exhibits better doping effect, and titanium can be diffused more uniformly. By co-doping the cathode material with aluminum and trivalent titanium, the compaction density can be increased while enhancing the ionic conductivity and capacity of the cathode material. Thus, the cathode material prepared by the method for preparing the cathode material of the embodiment of the present application can simultaneously achieve high capacity and high compaction density.

In some embodiments, the lithium titanium phosphate material includes a second core particle and a second coating layer covering a surface of the second core particle. The second core particle is represented by a chemical formula of Li₃Ti(PO₄)₂, and the second coating layer includes aluminum element.

In these embodiments, the lithium titanium phosphate material reacts with the second lithium source, the iron source, and the carbon source to obtain the cathode material, which not only introduces titanium and aluminum elements but also supplements lithium element and phosphate groups, thereby contributing to improving the compaction density and capacity of the cathode material.

In some embodiments, the second coating layer includes Al₂O₃.

In some embodiments, in the mixture of the titanium source, the first lithium source, and the phosphorus source, the ratio of amount of substance of titanium element, lithium element, and phosphorus element is 1:(3.2 to 3.8):(2.1 to 2.5).

In these embodiments, maintaining the ratio of amount of substance of the titanium element, the lithium element, and the phosphorus element in the mixture of the titanium source, the first lithium source, and the phosphorus source at 1:(3.2 to 3.8):(2.1 to 2.5) is beneficial for obtaining a second core particle with an appropriate ratio of amount of substance of the various elements. This results in a lithium titanium phosphate material with an appropriate ratio of amount of substance of the various elements, thereby contributing to improving the compaction density and capacity of the cathode material.

Optionally, in the mixture of the titanium source, the first lithium source, and the phosphorus source, the ratio of amount of substance of the titanium element to the lithium element is 1:3.2, 1:3.3, 1:3.4, 1:3.5, 1:3.6, 1:3.7, or 1:3.8. Alternatively, in the mixture of the titanium source, the first lithium source, and the phosphorus source, the ratio of amount of substance of the titanium element to the lithium element can be within a range between any two of these ratios of amount of substance.

Optionally, in the mixture of the titanium source, the first lithium source, and the phosphorus source, the ratio of amount of substance of the titanium element to the phosphorus element is 1:2.1, 1:2.2, 1:2.3, 1:2.4, or 1:2.5. Alternatively, in the mixture of the titanium source, the first lithium source, and the phosphorus source, the ratio of amount of substance of the titanium element to the phosphorus element can be within a range between any two of these ratios of amount of substance.

In some embodiments, the ratio of amount of substance of titanium element in the preliminary material to aluminum element in the aluminum source is 1:(0.1 to 0.2).

In these embodiments, maintaining the ratio of amount of substance of the titanium element in the preliminary material to the aluminum element in the aluminum source within the range of 1:(0.1 to 0.2) is beneficial for obtaining a lithium titanium phosphate material with appropriate doping amounts of the titanium element and the aluminum element, and thus obtaining a cathode material with appropriate doping amounts of the titanium element and the aluminum element, which is beneficial for balancing the capacity and compaction density of the cathode material.

Optionally, the ratio of amount of substance of the titanium element in the preliminary material to the aluminum element in the aluminum source is 1:0.1, 1:0.11, 1:0.12, 1:0.13, 1:0.14, 1:0.15, 1:0.16, 1:0.17, 1:0.18, 1:0.19, or 1:0.2. Alternatively, the ratio of amount of substance of the titanium element in the preliminary material to the aluminum element in the aluminum source can be within a range between any two of these ratios of amount of substance.

In some embodiments, the ratio of amount of substance of titanium element in the lithium titanium phosphate material, iron element in the iron source, lithium element in the second lithium source, and carbon element in the carbon source is 1:(5 to 10):(5.2 to 11):(12 to 36).

In these embodiments, maintaining the ratio of amount of substance of the titanium element in the lithium titanium phosphate material, the iron element in the iron source, the lithium element in the second lithium source, and the carbon element in the carbon source within the range of 1:(5 to 10):(5.2 to 11):(12 to 36) is beneficial for obtaining a cathode material with appropriate ratio of amount of substance of the various elements, which is beneficial for balancing the capacity and compaction density of the cathode material.

Optionally, the ratio of amount of substance of the titanium element in the lithium titanium phosphate material to the iron element in the iron source is 1:5, 1:5.5, 1:6, 1:6.5, 1:7, 1:7.5, 1:8, 1:8.5, 1:9, 1:9.5, or 1:10. Alternatively, the ratio of amount of substance of the titanium element in the lithium titanium phosphate material to the iron element in the iron source can be within a range between any two of these ratios of amount of substance.

Optionally, the ratio of amount of substance of the titanium element in the lithium titanium phosphate material to the lithium element in the second lithium source is 1:5.2, 1:5.5, 1:6, 1:7, 1:8, 1:9, 1:10, or 1:11. Alternatively, the ratio of amount of substance of the titanium element in the lithium titanium phosphate material to the lithium element in the second lithium source can be within a range between any two of these ratios of amount of substance.

Optionally, the ratio of amount of substance of the titanium element in the lithium titanium phosphate material to the carbon element in the carbon source is 1:12, 1:15, 1:20, 1:25, 1:30, or 1:36. Alternatively, the ratio of amount of substance of the titanium element in the lithium titanium phosphate material to the carbon element in the carbon source can be within a range between any two of these ratios of amount of substance.

In some embodiments, the temperature of the first reaction treatment is in a range from 200 °C to 350 °C.

Optionally, the temperature of the first reaction treatment is 200 °C, 220 °C, 250 °C, 280 °C, 300 °C, 320 °C, or 350 °C. Alternatively, the temperature of the first reaction treatment can be within a range between any two of these temperatures.

In some embodiments, the pressure of the first reaction treatment is in a range from 10 MPa to 20 MPa.

Optionally, the pressure of the first reaction treatment is 10 MPa, 12 MPa, 14 MPa, 16 MPa, 18 MPa, or 20 MPa. Alternatively, the pressure of the first reaction treatment can be within a range between any two of these pressures.

In some embodiments, the time period of the first reaction treatment is in a range from 5 h to 15 h.

Optionally, the time period of the first reaction treatment is 5 h, 7 h, 9 h, 11 h, 13 h, or 15 h. Alternatively, the time period of the first reaction treatment can be within a range between any two of these time periods.

In these embodiments, maintaining the temperature within the range from 200 °C to 350 °C, the pressure within the range from 10 MPa to 20 MPa, and the time period within the range from 5 h to 15 h for the first reaction treatment is beneficial for obtaining the preliminary material from the titanium source, the first lithium source, and the phosphorus source through the first reaction treatment.

In some embodiments, the titanium source includes titanium trichloride.

In these embodiments, the titanium source includes titanium trichloride. Compared to conventional cathode materials doped with tetravalent titanium, trivalent titanium has a larger ionic radius, making it easier to dope at the iron site. Additionally, the trivalent titanium doping does not require a reduction reaction, and thus can be performed at a lower temperature, resulting in better doping effect of trivalent titanium and more uniform titanium diffusion.

In some embodiments, the first lithium source includes at least one of lithium hydroxide, lithium oxide, lithium dihydrogen phosphate, and lithium monohydrogen phosphate.

In some embodiments, the phosphorus source includes at least one of lithium dihydrogen phosphate and lithium monohydrogen phosphate.

In some embodiments, the iron source includes ferric phosphate.

In these embodiments, adopting the above first lithium source, phosphorus source, and iron source can reduce the introduction of impurities, which is beneficial for preparing a high-purity preliminary material and, subsequently, a high-purity cathode material.

In some embodiments, the second lithium source includes at least one of lithium carbonate, lithium hydroxide, lithium oxalate, and lithium acetate.

In these embodiments, adopting the above second lithium source can reduce the introduction of impurities, which is beneficial for preparing a high-purity cathode material.

In some embodiments, the step of subjecting the titanium source, the first lithium source, and the phosphorus source to the first reaction treatment further includes adding a reducing agent.

In these embodiments, in the step of subjecting the titanium source, the first lithium source, and the phosphorus source to the first reaction treatment, the reducing agent is added to prevent the oxidation of trivalent titanium during the reaction.

In some embodiments, the ratio of amount of substance of the reducing agent to titanium element in the titanium source is (0.1 to 0.2):1.

In these embodiments, maintaining the ratio of amount of substance of the reducing agent to the titanium element in the titanium source within the above range is beneficial for sufficiently preventing the oxidation of trivalent titanium during the reaction.

Optionally, the ratio of amount of substance of the reducing agent to the titanium element in the titanium source is 0.1:1, 0.12:1, 0.14:1, 0.16:1, 0.18:1, or 0.2:1. Alternatively, the ratio of amount of substance of the reducing agent to the titanium element in the titanium source can be within a range between any two of these ratios of amount of substance.

In some embodiments, the reducing agent includes at least one of hydrazine hydrate, sodium sulfite, and hypophosphorous acid.

In these embodiments, adopting the above reducing agent can reduce the introduction of impurities, which is beneficial for preparing a high-purity cathode material.

In some embodiments, the step of subjecting the titanium source, the first lithium source, and the phosphorus source to the first reaction treatment to obtain the preliminary material includes the following steps:

mixing the titanium source, the first lithium source, the phosphorus source, and the reducing agent to form a first mixed raw material;

introducing the first mixed raw material to a high-pressure reactor to proceed a hydrothermal reaction to obtain the preliminary material.

In some embodiments, the first mixed raw material includes a solvent, which can be at least one of distilled water, deionized water, or purified water.

In some embodiments, during the step of introducing the first mixed raw material to the high-pressure reactor to proceed the hydrothermal reaction, the first mixed raw material is continuously stirred.

In some embodiments, the stirring speed is in a range from 100 r/min to 300 r/min.

Optionally, the stirring speed is 100 r/min, 150 r/min, 200 r/min, 250 r/min, or 300 r/min. Alternatively, the stirring speed can be within a range between any two of these speeds.

In some embodiments, during the step of introducing the first mixed raw material to the high-pressure reactor to proceed the hydrothermal reaction, the pH value of the first mixed raw material is maintained in a range from 10.5 to 11.5 by using a pH adjuster.

Optionally, during the step of introducing the first mixed raw material to the high-pressure reactor to proceed the hydrothermal reaction, the pH value of the first mixed raw material is maintained at 10.5, 10.6, 10.7, 10.8, 10.9, 11.0, 11.1, 11.2, 11.3, 11.4, or 11.5 by using the pH adjuster. Alternatively, the pH value of the first mixed raw material can be within a range between any two of these pH values. It can be understood that the pH values in the present application are all measured at 25 °C.

In some embodiments, the pH adjuster includes ammonia solution.

In some embodiments, the step of introducing the first mixed raw material to the high-pressure reactor to proceed the hydrothermal reaction to obtain the preliminary material includes the following steps:
introducing the first mixed raw material to the high-pressure reactor to proceed the hydrothermal reaction;
washing and drying a reaction product of the hydrothermal reaction to obtain the preliminary material.

In some embodiments, the reaction product of the hydrothermal reaction is washed through countercurrent washing. The reaction product is subjected to countercurrent washing with a washing liquid until the conductivity of the washing liquid after washing is less than or equal to 200 µS/cm.

In some embodiments, the washing liquid for the countercurrent washing is purified water or deionized water.

In some embodiments, the reaction product of the hydrothermal reaction is dried through baking out.

In some embodiments, the baking out is performed for 8 h to 24 h.

In some embodiments, the baking out is performed at 90 °C to 110 °C.

In some embodiments, the step of subjecting the preliminary material and the aluminum source to the second reaction treatment includes the following steps:
mixing the preliminary material, a dispersant, and the aluminum source to form a first slurry, and adjusting a pH value of the first slurry to 8 to 10;
subjecting the first slurry to solid-liquid separation to obtain a solid product;
subjecting the solid product to a first calcination treatment to obtain the lithium titanium phosphate material.

In these embodiments, a lithium titanium phosphate material with high activity, high purity, and small primary particle size can be prepared through the above second reaction treatment, which is beneficial for uniform mixing of raw materials during the subsequent third reaction treatment, thereby improving the uniform distribution of titanium element and aluminum element in the first core particle, which is further beneficial for improving the compaction density and capacity of the cathode material.

Optionally, the pH of the first slurry is 8, 8.2, 8.4, 8.6, 8.8, 9, 9.2, 9.4, 9.6, 9.8, or 10. Alternatively, the pH value of the first slurry can be within a range between any two of these pH values.

In some embodiments, the first slurry includes a solvent, which can be at least one of distilled water, deionized water, or purified water.

In some embodiments, the calcination temperature of the first calcination treatment is in a range from 600 °C to 800 °C.

Optionally, the calcination temperature of the first calcination treatment is 600 °C, 620 °C, 640 °C, 660 °C, 680 °C, 700 °C, 720 °C, 740 °C, 760 °C, 780 °C, or 800 °C. Alternatively, the calcination temperature of the first calcination treatment can be within a range between any two of these temperatures.

In some embodiments, the calcination time period of the first calcination treatment is in a range from 6 h to 12 h.

Optionally, the calcination time period of the first calcination treatment is 6 h, 7 h, 8 h, 9 h, 10 h, 11 h, or 12 h. Alternatively, the calcination time period of the first calcination treatment can be within a range between any two of these time periods.

In some embodiments, the first calcination treatment is performed in a protective gas atmosphere.

In some embodiments, the protective gas includes at least one of nitrogen and argon.

In some embodiments, after the first calcination treatment of the solid product, the obtained lithium titanium phosphate material is cooled to 25 °C to 50 °C before being discharged.

Optionally, after the first calcination treatment of the solid product, the obtained lithium titanium phosphate material is cooled to 25 °C, 30 °C, 35 °C, 40 °C, 45 °C, or 50 °C before being discharged. Alternatively, the discharge temperature can be within a range between any two of these temperatures.

In some embodiments, during the step of mixing the preliminary material, the dispersant, and the aluminum source to form the first slurry, and adjusting the pH value of the first slurry to 8 to 10, the temperature of the first slurry is maintained at 30 °C to 60 °C.

Optionally, during the step of mixing the preliminary material, the dispersant, and the aluminum source to form the first slurry, and adjusting the pH value of the first slurry to 8 to 10, the temperature of the first slurry is maintained at 30 °C, 35 °C, 40 °C, 45 °C, 50 °C, 55 °C, or 60 °C. Alternatively, the temperature of the first slurry can be within a range between any two of these temperatures.

In some embodiments, the step of adjusting the pH value of the first slurry to 8 to 10 includes the following step:
introducing carbon dioxide into the first slurry to adjust the pH value to 8 to 10.

In these embodiments, adjusting the pH value of the first slurry to 8 to 10 is beneficial for forming the first slurry containing the solid product.

In some embodiments, carbon dioxide is introduced into the first slurry for 2 h to 4 h.

Optionally, carbon dioxide is introduced into the first slurry for 2 h, 2.2 h, 2.4 h, 2.6 h, 2.8 h, 3 h, 3.2 h, 3.4 h, 3.6 h, 3.8 h, or 4 h. Alternatively, the time period of introduction of carbon dioxide into the first slurry can be within a range between any two of these time periods.

In some embodiments, the dispersant includes at least one of polyethylene glycol and polyvinyl alcohol.

In some embodiments, the dispersant includes at least one of PEG2000, PEG4000, PEG6000, PVA105, PVA203, and PVA205.

In some embodiments, the aluminum source includes sodium aluminate or a water solution of sodium aluminate.

In some embodiments, the concentration of sodium aluminate in the water solution is in a range from 0.02 mol/L to 0.1 mol/L.

Optionally, the concentration of sodium aluminate in the water solution is 0.02 mol/L, 0.04 mol/L, 0.06 mol/L, 0.08 mol/L, or 0.1 mol/L. Alternatively, the concentration of sodium aluminate in the water solution can be within a range between any two of these concentrations.

In some embodiments, before subjecting the solid product to the first calcination treatment, the method further includes the following step:
washing and drying the solid product.

In some embodiments, the solid product is washed through countercurrent washing. The solid product is subjected to countercurrent washing with a washing liquid until the conductivity of the washing liquid after washing is less than or equal to 200 µS/cm.

In some embodiments, the washing liquid for the countercurrent washing is purified water or deionized water.

In some embodiments, the solid product is dried through spray drying.

In some embodiments, the inlet temperature of the spray drying is in a range from 150 °C to 350 °C, and the outlet temperature of the spray drying is in a range from 60 °C to 110 °C.

Optionally, the inlet temperature of the spray drying is 150 °C, 180 °C, 200 °C, 220 °C, 250 °C, 280 °C, 300 °C, 320 °C, or 350 °C. Alternatively, the inlet temperature of the spray drying can be within a range between any two of these temperatures. Optionally, the outlet temperature of the spray drying is 60 °C, 70 °C, 80 °C, 90 °C, 100 °C, or 110 °C. Alternatively, the outlet temperature of the spray drying can be within a range between any two of these temperatures.

In some embodiments, the step of subjecting the lithium titanium phosphate material, the iron source, the second lithium source, and the carbon source to the third reaction treatment to obtain the cathode material includes the following steps:
mixing the lithium titanium phosphate material, the iron source, the second lithium source, and the carbon source to form a second slurry;
grinding the second slurry until a particle size of particles in the second slurry ranges from 300 nm to 600 nm;
subjecting the second slurry to solid-liquid separation to obtain a mixed material;
subjecting the mixed material to a second calcination treatment to obtain the cathode material.

In these embodiments, in the above step of third reaction treatment, by mixing the lithium titanium phosphate material, the iron source, the second lithium source, and the carbon source to form the second slurry, and grinding the second slurry until the particle size of the particles in the second slurry ranges from 300 nm to 600 nm, the raw materials can be uniformly mixed and thoroughly contact with each other, so that the titanium element and the aluminum element can be more uniformly distributed in the first core particle of the cathode material during the second calcination treatment, which is beneficial for improving the compaction density and capacity of the cathode material.

Optionally, the second slurry is ground until the particle size of the particles in the second slurry is 300 nm, 350 nm, 400 nm, 450 nm, 500 nm, 550 nm, or 600 nm. Alternatively, the particle size of the particles in the second slurry can be within a range between any two of these particle sizes.

In some embodiments, the second slurry includes a solvent, which can be water. Specifically, the solvent in the second slurry can be at least one of deionized water, purified water, or ultrapure water.

In some embodiments, the calcination temperature of the second calcination treatment is in a range from 700 °C to 850 °C.

Optionally, the calcination temperature of the second calcination treatment is 700 °C, 720 °C, 740 °C, 760 °C, 780 °C, 800 °C, 810 °C, 830 °C, or 850 °C. Alternatively, the calcination temperature of the second calcination treatment can be within a range between any two of these temperatures.

In some embodiments, the calcination time period of the second calcination treatment is in a range from 6 h to 15 h.

Optionally, the calcination time period of the second calcination treatment is 6 h, 7 h, 8 h, 9 h, 10 h, 11 h, 12 h, 13 h, 14 h, or 15 h. Alternatively, the calcination time period of the second calcination treatment can be within a range between any two of these time periods.

In some embodiments, the second calcination treatment is performed in a protective gas atmosphere.

In some embodiments, after the first calcination treatment of the mixed material, the obtained cathode material is cooled to 25 °C to 50 °C before being discharged.

Optionally, after the first calcination treatment of the mixed material, the obtained cathode material is cooled to 25 °C, 30 °C, 35 °C, 40 °C, 45 °C, or 50 °C before being discharged. Alternatively, the discharge temperature can be within a range between any two of these temperatures.

In a third aspect, an embodiment of the present application provides a cathode plate, including a current collector and an active layer disposed on a surface of the current collector. The active layer includes the cathode material described in any of the above embodiments or the cathode material prepared by the method for preparing the cathode material described in any of the above embodiments.

In these embodiments, the cathode plate includes the above-described cathode material, thus having good electrochemical performance.

In a fourth aspect, an embodiment of the present application provides a secondary battery, including the above-described cathode plate.

In these embodiments, the secondary battery includes the above-described cathode plate, thus possessing comprehensively improved electrochemical performance, making it suitable for various application scenarios.

In a fifth aspect, an embodiment of the present application provides an electrical device.

The electrical devices provided in the embodiments of the present application can include, but are not limited to, smartphones, tablets, laptops, electric toys, power tools, electric bicycles, electric vehicles, ships, and spacecraft. The electric toys can include stationary or mobile electric toys, such as gaming consoles, electric toy cars, electric toy boats, and electric toy airplanes. The spacecraft can include aircraft, rockets, space shuttles, and spaceships.

The following provides some specific examples. It should be noted that the examples described below are exemplary, and are only intended to explain the present application rather than being construed as limitation to the present application. Where specific techniques or conditions are not indicated in the examples, the procedures shall be carried out in accordance with the techniques or conditions described in the literatures in the field or in accordance with the product specification. The reagents or instruments for which no manufacturers are noted are all common products commercially available from the market.

### I. Preparation Method

### Example 1

### Preparation Method of Cathode Material:

(1) Titanium trichloride, hydrazine hydrate, lithium hydroxide, and lithium dihydrogen phosphate in a ratio of amount of substance of 1:0.15:1.2:2.3 were mixed and then put to a high-pressure reactor. Ammonia solution was added to the high-pressure reactor to adjust the pH value of the solution to 11.0. A hydrothermal reaction was performed at a temperature of 300 °C and a pressure of 17 MPa for a time period of 10 h, with a stirring speed of 200 r/min. The reaction product was washed and dried. Specifically, the reaction product was countercurrent washed with purified water until the conductivity of the washing liquid after washing was less than or equal to 200 µS/cm, then the washed reaction product was dried at 100 °C for 16 h to obtain a preliminary material.
(2) The preliminary material, a solution of sodium aluminate, and a dispersant were mixed and stirred to form a first slurry. The dispersant was PEG6000, and the ratio of amount of substance of titanium element in the preliminary material, sodium aluminate, and the dispersant was 1:0.15:0.08. The concentration of the sodium aluminate solution was 0.05 mol/L. The pH value of the first slurry was adjusted to 9 by introducing carbon dioxide into the first slurry. The introduction of carbon dioxide lasted for 3 h, and the reaction temperature was 45 °C. The first slurry was filtered to obtain a solid product, which was washed and dried. Specifically, the solid product was countercurrent washed with purified water until the conductivity of the washing liquid after washing was less than or equal to 200 µS/cm, and then the washed solid product was spray dried. Then, the solid product was subjected to a first calcination treatment to obtain a lithium titanium phosphate material. The calcination temperature of the first calcination treatment was 700 °C. The calcination time period was 9 h. The first calcination treatment was performed in a nitrogen atmosphere.
(3) The lithium titanium phosphate material, ferric phosphate, lithium carbonate, and glucose were mixed, and the ratio of amount of substance of titanium element in the lithium titanium phosphate material, iron element in ferric phosphate, lithium element in lithium carbonate, and carbon element in glucose was 1:8:8.1:24. Then water was added to form a second slurry. The second slurry was ground for nanolization until the particle size of the particles was 450 nm. Then, the second slurry was spray dried, and the obtained material was subjected to a second calcination treatment. The calcination temperature of the second calcination treatment was 800 °C, and the calcination time period was 10 h. The second calcination treatment was performed in a nitrogen atmosphere. The calcinated product was crushed, sieved, and vacuum-packed to obtain a cathode material.

### Cathode Material:

The cathode material in the present example includes a first core particle and a carbon layer covering a surface of the first core particle. The first core particle is represented by a chemical formula of Li_{10.9}Fe₈TiAl_{0.15}(PO₄)_{10.3}.

The SEM result of the cathode material in the present example is shown in FIG. 1. It can be seen that the cathode material is spherical particles with good dispersibility.

### Example 2

### Preparation Method of Cathode Material:

The method for preparing the cathode material in Example 2 was substantially the same or similar as that in Example 1, and the difference was only in that: in step (1) of the present example, the titanium source was titanium trichloride, the first lithium source was lithium acetate, the reducing agent was sodium sulfite, the phosphorus source was lithium dihydrogen phosphate.

### Cathode Material:

The cathode material in the present example includes a first core particle and a carbon layer covering a surface of the first core particle. The first core particle is represented by a chemical formula of Li_{10.9}Fe₈TiAl_{0.15}(PO₄)_{10.3}.

The SEM result of the cathode material in the present example is shown in FIG. 2. It can be seen that the cathode material is spherical particles with good dispersibility.

### Example 3

### Preparation Method of Cathode Material:

The method for preparing the cathode material in Example 3 was substantially the same or similar as that in Example 1, and the difference was only in that: in step (2) of the present example, the aluminum source was sodium aluminate, the dispersant was polyvinyl alcohol; in step (3), the second lithium source was lithium oxalate, and the carbon surface was sucrose.

### Cathode Material:

The cathode material in the present example includes a first core particle and a carbon layer covering a surface of the first core particle. The first core particle is represented by a chemical formula of Li_{10.9}Fe₈TiAl_{0.15}(PO₄)_{10.3}.

### Example 4

### Preparation Method of Cathode Material:

The method for preparing the cathode material in Example 4 was substantially the same or similar as that in Example 1, and the difference was only in that: in step (1), titanium trichloride, hydrazine hydrate, lithium hydroxide, and lithium dihydrogen phosphate were mixed according to a ratio of amount of substance of 1:0.1:1.1:2.1.

### Cathode Material:

The cathode material in the present example includes a first core particle and a carbon layer covering a surface of the first core particle. The first core particle is represented by a chemical formula of Li_{10.7}Fe₈TiAl_{0.15}(PO₄)_{10.1}.

### Example 5

### Preparation Method of Cathode Material:

The method for preparing the cathode material in Example 5 was substantially the same or similar as that in Example 1, and the difference was only in that: in step (1), titanium trichloride, hydrazine hydrate, lithium hydroxide, and lithium dihydrogen phosphate were mixed according to a ratio of amount of substance of 1:0.2:1.3:2.5.

### Cathode Material:

The cathode material in the present example includes a first core particle and a carbon layer covering a surface of the first core particle. The first core particle is represented by a chemical formula of Li_{11.0}Fe₈TiAl_{0.15}(PO₄)_{10.5}.

### Example 6

### Preparation Method of Cathode Material:

The method for preparing the cathode material in Example 6 was substantially the same or similar as that in Example 1, and the difference was only in that: in step (1), titanium trichloride, hydrazine hydrate, lithium hydroxide, and lithium dihydrogen phosphate were mixed according to a ratio of amount of substance of 1:0.1:1.1:2.5.

### Cathode Material:

The cathode material in the present example includes a first core particle and a carbon layer covering a surface of the first core particle. The first core particle is represented by a chemical formula of Li_{10.9}Fe₈TiAl_{0.15}(PO₄)_{10.5}.

### Example 7

### Preparation Method of Cathode Material:

The method for preparing the cathode material in Example 7 was substantially the same or similar as that in Example 1, and the difference was only in that: in step (1), titanium trichloride, hydrazine hydrate, lithium hydroxide, and lithium dihydrogen phosphate were mixed according to a ratio of amount of substance of 1:0.1:1.3:2.5.

### Cathode Material:

The cathode material in the present example includes a first core particle and a carbon layer covering a surface of the first core particle. The first core particle is represented by a chemical formula of Li_{11.0}Fe₈TiAl_{0.15}(PO₄)_{10.5}.

### Example 8

### Preparation Method of Cathode Material:

The method for preparing the cathode material in Example 8 was substantially the same or similar as that in Example 1, and the difference was only in that: in step (1), titanium trichloride, hydrazine hydrate, lithium hydroxide, and lithium dihydrogen phosphate were mixed according to a ratio of amount of substance of 1:0.05:1:2.

The cathode material in the present example includes a first core particle and a carbon layer covering a surface of the first core particle. The first core particle is represented by a chemical formula of Li_{10.8}Fe₈TiAl_{0.15}(PO₄)₁₀.

### Example 9

### Preparation Method of Cathode Material:

The method for preparing the cathode material in Example 9 was substantially the same or similar as that in Example 1, and the difference was only in that: in step (1), titanium trichloride, hydrazine hydrate, lithium hydroxide, and lithium dihydrogen phosphate were mixed according to a ratio of amount of substance of 1:0.3:1.5:3.

The cathode material in the present example includes a first core particle and a carbon layer covering a surface of the first core particle. The first core particle is represented by a chemical formula of Li_{11.2}Fe₈TiAl_{0.15}(PO₄)₁₁.

### Example 10

The method for preparing the cathode material in Example 10 was substantially the same or similar as that in Example 1, and the difference was only in that: in step (2), the ratio of amount of substance of titanium element in the preliminary material, sodium aluminate, and the dispersant was 1:0.1:0.05.

### Cathode Material:

The cathode material in the present example includes a first core particle and a carbon layer covering a surface of the first core particle. The first core particle is represented by a chemical formula of Li_{10.9}Fe₈TiAl_{0.10}(PO₄)_{10.3}.

### Example 11

The method for preparing the cathode material in Example 11 was substantially the same or similar as that in Example 1, and the difference was only in that: in step (2), the ratio of amount of substance of titanium element in the preliminary material, sodium aluminate, and the dispersant was 1:0.2:0.1.

### Cathode Material:

The cathode material in the present example includes a first core particle and a carbon layer covering a surface of the first core particle. The first core particle is represented by a chemical formula of Li_{10.9}Fe₈TiAl_{0.20}(PO₄)_{10.3}.

### Example 12

The method for preparing the cathode material in Example 12 was substantially the same or similar as that in Example 1, and the difference was only in that: in step (3), a aluminum-coated lithium titanium phosphate material, ferric phosphate, lithium carbonate, and glucose were mixed, and the ratio of amount of substance of titanium element in the lithium titanium phosphate material, iron element in ferric phosphate, lithium element in lithium carbonate, and carbon element in glucose was 1:5:5.2:12.

### Cathode Material:

The cathode material in the present example includes a first core particle and a carbon layer covering a surface of the first core particle. The first core particle is represented by a chemical formula of Li_{8.7}Fe₅TiAl_{0.15}(PO₄)_{7.3}.

### Example 13

The method for preparing the cathode material in Example 13 was substantially the same or similar as that in Example 1, and the difference was only in that: in step (3), a aluminum-coated lithium titanium phosphate material, ferric phosphate, lithium carbonate, and glucose were mixed, and the ratio of amount of substance of titanium element in the lithium titanium phosphate material, iron element in ferric phosphate, lithium element in lithium carbonate, and carbon element in glucose was 1:10:11:36.

### Cathode Material:

The cathode material in the present example includes a first core particle and a carbon layer covering a surface of the first core particle. The first core particle is represented by a chemical formula of Li_{14.5}Fe₁₀TiAl_{0.15}(PO₄)_{12.3}.

### Example 14

The method for preparing the cathode material in Example 14 was substantially the same or similar as that in Example 1, and the difference was only in that: in step (3), a aluminum-coated lithium titanium phosphate material, ferric phosphate, lithium carbonate, and glucose were mixed, and the ratio of amount of substance of titanium element in the lithium titanium phosphate material, iron element in ferric phosphate, lithium element in lithium carbonate, and carbon element in glucose was 1:5:11:36.

### Cathode Material:

The cathode material in the present example includes a first core particle and a carbon layer covering a surface of the first core particle. The first core particle is represented by a chemical formula of Li_{14.5}Fe₅TiAl_{0.15}(PO₄)_{8.5}.

### Example 15

The method for preparing the cathode material in Example 15 was substantially the same or similar as that in Example 1, and the difference was only in that: in step (3), a aluminum-coated lithium titanium phosphate material, ferric phosphate, lithium carbonate, and glucose were mixed, and the ratio of amount of substance of titanium element in the lithium titanium phosphate material, iron element in ferric phosphate, lithium element in lithium carbonate, and carbon element in glucose was 1:8:4:6.

### Cathode Material:

The cathode material in the present example includes a first core particle and a carbon layer covering a surface of the first core particle. The first core particle is represented by a chemical formula of Li_{7.5}Fe₈TiAl_{0.15}(PO₄)_{10.3}.

### Example 16

The method for preparing the cathode material in Example 16 was substantially the same or similar as that in Example 1, and the difference was only in that: in step (3), a aluminum-coated lithium titanium phosphate material, ferric phosphate, lithium carbonate, and glucose were mixed, and the ratio of amount of substance of titanium element in the lithium titanium phosphate material, iron element in ferric phosphate, lithium element in lithium carbonate, and carbon element in glucose was 1:8:7:48.

### Cathode Material:

The cathode material in the present example includes a first core particle and a carbon layer covering a surface of the first core particle. The first core particle is represented by a chemical formula of Li_{14.5}Fe₈TiAl_{0.15}(PO₄)_{12.3}.

### Example 17

The method for preparing the cathode material in Example 17 was substantially the same or similar as that in Example 1, and the difference was only in that: in step (1), the hydrothermal reaction was performed at a temperature of 200 °C and a pressure of 10 MPa for a time period of 5 h, with a stirring speed of 100 r/min. The reaction product was dried at 90 °C for 24 h. In step (2), the pH value of the first slurry was adjusted to 8 by introducing carbon dioxide into the first slurry. The introduction of carbon dioxide lasted for 2 h, and the reaction temperature was 30 °C. The washed solid product was spray dried. The calcination temperature of the first calcination treatment was 600 °C. The calcination time period was 6 h. In step (3), the second slurry was ground for nanolization until the particle size of the particles was 300 nm. The calcination temperature of the second calcination treatment was 700 °C, and the calcination time period was 6 h.

### Example 18

The method for preparing the cathode material in Example 18 was substantially the same or similar as that in Example 1, and the difference was only in that: in step (1), the hydrothermal reaction was performed at a temperature of 350 °C and a pressure of 20 MPa for a time period of 15 h, with a stirring speed of 300 r/min. The reaction product was dried at 110 °C for 8 h. In step (2), the pH value of the first slurry was adjusted to 10 by introducing carbon dioxide into the first slurry. The introduction of carbon dioxide lasted for 4 h, and the reaction temperature was 60 °C. The washed solid product was spray dried. The calcination temperature of the first calcination treatment was 800 °C. The calcination time period was 12 h. In step (3), the second slurry was ground for nanolization until the particle size of the particles was 600 nm. The calcination temperature of the second calcination treatment was 850 °C, and the calcination time period was 15 h.

### Comparative Example 1

### Preparation Method of Cathode Material:

The method for preparing the cathode material in Comparative Example 1 was substantially the same or similar as that in Example 1, and the difference was only in that: in step (1), the titanium source was titanium tetrachloride.

### Comparative Example 2

### Preparation Method of Cathode Material:

The method for preparing the cathode material in Comparative Example 2 was substantially the same or similar as that in Example 1, and the difference was only in that: in step (2), no aluminum source was added.

The performance of the cathode materials in the above examples and comparative examples was tested. The elemental composition was determined by ICP-OES; the powder resistivity was measured using the four-probe method under a pressure of 10 MPa; the compaction density was measured under a pressure of 3 tons; the specific surface area was determined by the BET gas adsorption method; the pH value was tested according to GB/T 9724, Chemical Reagent - General Rule for the Determination of pH; the free lithium content was determined by potentiometric titration; the tap density was tested using a tap density tester with 5000 vibrations; the D10, D50, and D90 particle sizes were measured using a laser particle size analyzer; and the carbon and sulfur contents were measured using a carbon-sulfur analyzer.

The test results are shown in Tables 1 to 3:

**Table 1**

| | Example 1 | Example 2 | Example 3 | Example 4 | Example 5 | Example 6 | Example 7 |
|---|---|---|---|---|---|---|---|
| Li (%) | 4.78 | 4.76 | 4.79 | 4.71 | 4.85 | 4.83 | 4.87 |
| Fe (%) | 28.49 | 28.36 | 28.39 | 28.87 | 28.38 | 28.36 | 28.33 |
| P (%) | 20.33 | 20.37 | 20.31 | 20.02 | 20.52 | 20.51 | 20.50 |
| Ti (%) | 2.99 | 2.98 | 2.97 | 3.02 | 2.97 | 2.98 | 2.96 |
| Al (ppm) | 2578.6 | 2573.1 | 2579.4 | 2599.2 | 2551.3 | 2558.4 | 2547.8 |
| Compaction density (g/mL) | 2.51 | 2.50 | 2.49 | 2.46 | 2.54 | 2.53 | 2.53 |
| BET (m²/g) | 12.3 | 12.2 | 12.9 | 12.8 | 12.1 | 12.2 | 12.3 |
| pH value | 8.45 | 8.38 | 8.49 | 8.53 | 8.41 | 8.44 | 8.46 |
| Free lithium (ppm) | 89.4 | 106.3 | 98.5 | 112.6 | 80.2 | 88.5 | 103.6 |
| Powder resistivity (Ωcm) | 10.5 | 10.1 | 8.9 | 10.9 | 10.1 | 9.7 | 9.9 |
| Tap density (g/mL) | 1.02 | 1.02 | 1.01 | 0.99 | 1.05 | 1.04 | 1.02 |
| D10 particle size (µm) | 0.56 | 0.52 | 0.53 | 0.50 | 0.61 | 0.68 | 0.61 |
| D50 particle size (µm) | 1.35 | 1.29 | 1.32 | 1.26 | 1.39 | 1.33 | 1.31 |
| D90 particle size (µm) | 10.38 | 12.72 | 9.45 | 14.56 | 10.01 | 12.89 | 13.68 |
| PDI | 7.27 | 9.46 | 6.76 | 11.16 | 6.76 | 9.18 | 9.98 |
| Chloride ions (ppm) | 14.2 | 14.3 | 13.8 | 14.1 | 12.6 | 12.3 | 12.9 |
| C (%) | 1.23 | 1.25 | 1.24 | 1.24 | 1.23 | 1.21 | 1.22 |
| S (ppm) | 26.5 | 32.7 | 29.6 | 25.3 | 24.2 | 22.9 | 24.8 |

**Table 2**

| | Example 8 | Example 9 | Example 10 | Example 11 | Example 12 | Example 13 | Example 14 |
|---|---|---|---|---|---|---|---|
| Li (%) | 4.56 | 4.97 | 4.79 | 4.78 | 5.32 | 5.17 | 7.38 |
| Fe (%) | 29.23 | 27.48 | 28.54 | 28.49 | 27.66 | 29.21 | 22.79 |
| P (%) | 20.21 | 21.21 | 20.37 | 20.33 | 20.61 | 19.99 | 20.88 |
| Ti (%) | 3.07 | 2.97 | 2.98 | 2.99 | 4.29 | 2.46 | 3.73 |
| Al (ppm) | 2625.3 | 2433.9 | 1647.8 | 3345.6 | 3697.5 | 2121.7 | 3207.5 |
| Compaction density (g/mL) | 2.41 | 2.61 | 2.53 | 2.46 | 2.46 | 2.49 | 2.54 |
| BET (m²/g) | 14.3 | 10.7 | 12.7 | 13.1 | 9.87 | 14.3 | 14.9 |
| pH value | 8.14 | 9.46 | 8.56 | 8.42 | 9.28 | 8.98 | 9.48 |
| Free lithium (ppm) | 57.4 | 234.7 | 90.3 | 91.3 | 147.9 | 118.5 | 189.5 |
| Powder resistivity (Ωcm) | 19.6 | 24.6 | 10.9 | 10.2 | 26.8 | 13.7 | 14.3 |
| Tap density (g/mL) | 1.01 | 1.11 | 1.03 | 1.01 | 1.05 | 1.01 | 1.05 |
| D10 particle size (µm) | 0.45 | 0.69 | 0.52 | 0.52 | 0.47 | 0.46 | 1.43 |
| D50 particle size (µm) | 1.01 | 1.55 | 1.42 | 1.21 | 1.25 | 1.48 | 1.54 |
| D90 particle size (µm) | 8.86 | 18.45 | 12.46 | 9.36 | 10.78 | 12.57 | 13.58 |
| PDI | 8.33 | 11.46 | 8.41 | 7.31 | 8.25 | 8.18 | 7.88 |
| Chloride ions (ppm) | 14.3 | 12.3 | 15.3 | 14.4 | 12.6 | 16.4 | 15.6 |
| C (%) | 1.23 | 1.22 | 1.22 | 1.24 | 1.02 | 1.58 | 1.87 |
| S (ppm) | 27.5 | 25.1 | 26.9 | 24.3 | 26.4 | 28.5 | 26.8 |

**Table 3**

| | Example 15 | Example 16 | Example 17 | Example 18 | Comparative Example 1 | Comparative Example 2 |
|---|---|---|---|---|---|---|
| Li (%) | 3.38 | 6.94 | 4.74 | 4.82 | 4.72 | 4.79 |
| Fe (%) | 29.09 | 25.52 | 28.44 | 28.53 | 28.11 | 28.68 |
| P (%) | 20.74 | 20.36 | 20.27 | 20.39 | 19.84 | 20.48 |
| Ti (%) | 3.05 | 2.68 | 2.95 | 2.99 | 3.02 | 3.01 |
| Al (ppm) | 2630.6 | 2313.6 | 2554.3 | 2582.7 | 2511.2 | 36.5 |
| Compaction density (g/mL) | 2.67 | 2.41 | 2.47 | 2.54 | 2.36 | 2.59 |
| BET (m²/g) | 7.6 | 16.8 | 12.9 | 11.6 | 15.9 | 12.1 |
| pH value | 8.03 | 9.86 | 8.43 | 8.49 | 8.99 | 8.36 |
| Free lithium (ppm) | 76.5 | 357.5 | 115.3 | 80.4 | 248.6 | 105.7 |
| Powder resistivity (Ωcm) | 369.7 | 11.2 | 10.9 | 10.3 | 34.6 | 10.1 |
| Tap density (g/mL) | 1.09 | 0.98 | 1.03 | 1.05 | 1.01 | 1.11 |
| D10 particle size (µm) | 0.53 | 0.32 | 0.51 | 0.59 | 0.47 | 0.65 |
| D50 particle size (µm) | 1.49 | 0.97 | 1.33 | 1.39 | 1.11 | 1.98 |
| D90 particle size (µm) | 19.57 | 7.66 | 11.38 | 13.47 | 7.89 | 21.57 |
| PDI | 12.78 | 7.57 | 8.17 | 9.27 | 6.68 | 10.56 |
| Chloride ions (ppm) | 17.4 | 14.6 | 14.8 | 14.9 | 18.9 | 15.7 |
| C (%) | 0.74 | 2.21 | 1.22 | 1.24 | 1.24 | 1.23 |
| S (ppm) | 27.5 | 30.1 | 26.8 | 26.9 | 29.6 | 24.7 |

### II. Testing Methods

### Secondary Battery Performance Testing:

The cathode materials prepared in the examples and comparative examples were respectively mixed with conductive carbon black and PVDF binder in a mass ratio of 90:5:5, coated onto aluminum foil with a thickness of 12 µm, and then dried in an oven at 110 °C for 10 h. The dried electrode plates were punched into cathode discs with a diameter of 15 mm and rolled to a compaction density of 2.5 g/cm³. Lithium discs with a diameter of 16 mm were used as the counter electrodes, and the electrolyte was 1M LiPF₆ dissolved in EC:EMC:DEC with a volume ratio of 1:1:1. The batteries were assembled in a glove box LG2400/1000TS, produced by Vigor Gas Purification Technology (Suzhou) Co., Ltd., to obtain button-type batteries, which were then subjected to charge-discharge performance testing.

The battery performance testing system (model: CT3002A) from Wuhan Land Electronics Technology Co., Ltd. was used for testing at 25 °C in a voltage range from 2 V to 3.75 V, respectively at 0.2 C and 1 C rates; and in a voltage range from 2 V to 3.1 V, respectively at 0.2 C and 1 C rates. The test results are shown in Table 4:

**Table 4**

| No. | 0.2C initial charge specific capacity (2V to 3.75V) (mAh/g) | 0.2C initial charge specific capacity (2V to 3.1V) (mAh/g) | 0.2C initial discharge specific capacity (2V to 3.1V) (mAh/g) | 1C initial charge specific capacity (2V to 3.75V) (mAh/g) | 1C initial discharge specific capacity (2V to 3.1V) (mAh/g) |
|---|---|---|---|---|---|
| Example 1 | 168.5 | 165.7 | 35.6 | 160.4 | 30.9 |
| Example 2 | 167.2 | 164.7 | 35.1 | 159.2 | 30.2 |
| Example 3 | 168.1 | 165.9 | 35.8 | 160.1 | 30.2 |
| Example 4 | 167.9 | 165.2 | 35.9 | 160.1 | 31.3 |
| Example 5 | 169.3 | 166.2 | 34.3 | 161.5 | 32.1 |
| Example 6 | 169.1 | 166.0 | 34.9 | 161.9 | 31.8 |
| Example 7 | 169.3 | 166.3 | 34.2 | 161.7 | 32.2 |
| Example 8 | 162.1 | 156.7 | 35.7 | 154.7 | 30.9 |
| Example 9 | 162.9 | 157.5 | 35.1 | 153.8 | 29.8 |
| Example 10 | 167.8 | 165.2 | 36.1 | 159.7 | 31.4 |
| Example 11 | 169.2 | 166.1 | 35.1 | 160.9 | 30.2 |
| Example 12 | 169.9 | 166.8 | 35.6 | 161.7 | 30.9 |
| Example 13 | 169.4 | 166.3 | 34.9 | 161.3 | 29.4 |
| Example 14 | 166.4 | 164.1 | 34.7 | 160.2 | 29.1 |
| Example 15 | 161.2 | 158.7 | 32.6 | 153.2 | 27.8 |
| Example 16 | 161.1 | 158.3 | 32.1 | 153.3 | 28.1 |
| Example 17 | 168.1 | 165.1 | 35.2 | 160.1 | 30.3 |
| Example 18 | 168.2 | 165.3 | 35.1 | 159.6 | 30.1 |
| Comparative Example 1 | 160.5 | 158.3 | 25.2 | 152.7 | 23.6 |
| Comparative Example 2 | 159.2 | 157.4 | 3.7 | 150.5 | 4.9 |

### III. Analysis of Test Results of the Examples and Comparative Examples

From the data shown in Tables 1 to 3, it can be seen that the compaction density of the lithium iron phosphate cathode materials provided in the examples of the present application ranges from 2.41 g/mL to 2.67 g/mL. The compaction density of the lithium iron phosphate cathode material obtained in Comparative Example 1 is 2.36 g/mL. In Comparative Example 1, the aluminum element and tetravalent titanium are introduced for doping the cathode material, which results in a lower compaction density of the cathode material. The lithium iron phosphate cathode materials provided in the examples of the present application achieve a higher compaction density through the co-doping of aluminum element and trivalent titanium. The compaction density of the lithium iron phosphate cathode material obtained in Comparative Example 2 is 2.59 g/mL. No aluminum element is introduced into the lithium iron phosphate cathode material in Comparative Example 2, which alleviates the reduction in compaction density caused by metal doping. The compaction density of Examples 1 to 14 and 16 to 18 is comparable to that of the lithium iron phosphate cathode material in Comparative Example 2. Compared with Comparative Examples 1 and 2, the cathode materials provided in the examples of the present application have improved compaction density.

From the data shown in Tables 1 to 3, it can be seen that the powder resistivity of the lithium iron phosphate cathode materials obtained in Examples 1 to 7 and 10 to 11 ranges from 8.9 Ωcm to 10.9 Ωcm. The powder resistivity of the lithium iron phosphate cathode material obtained in Example 12 is 26.8 Ωcm. The powder resistivity of the lithium iron phosphate cathode material obtained in Example 8 is 19.6 Ωcm. The powder resistivity of the lithium iron phosphate cathode material obtained in Example 9 is 24.6 Ωcm. Compared with other examples, the addition amount of titanium trichloride in Example 8 exceeds the specified range, and the addition amount of titanium trichloride in Example 9 is below the specified range, both of which result in impurities in the lithium iron phosphate phase, leading to higher powder resistivity of the lithium iron phosphate cathode material obtained in Examples 8 and 9. Due to that the addition amount of carbon source is below the specified range, the lithium iron phosphate cathode material obtained in Example 15 has higher powder resistivity. Meanwhile, due to the lower carbon content, the particles of the lithium iron phosphate cathode material in Example 15 are more likely to grow, resulting in a higher compaction density. In Comparative Example 1, tetravalent titanium is used as the titanium source, and the obtained lithium iron phosphate cathode material has lower electrical conductivity compared to the lithium iron phosphate cathode material prepared using trivalent titanium as the titanium source. Therefore, compared with Comparative Example 1, the lithium iron phosphate cathode materials obtained in Examples 1 to 14 and 16 to 18 have lower powder resistivity. In Comparative Example 2, no aluminum source was added, and the obtained lithium iron phosphate cathode material is not coated with aluminum oxide. Since aluminum oxide has poor electrical conductivity, the lithium iron phosphate cathode material obtained in Comparative Example 2 has a lower powder resistivity.

From the data shown in Table 4, it can be seen that the 0.2 C initial charge specific capacity (2 V to 3.75 V) of the examples ranges from 161.1 mAh/g to 169.9 mAh/g, the 0.2 C initial charge specific capacity (2 V to 3.1 V) ranges from 156.7 mAh/g to 166.8 mAh/g, the 0.2 C initial discharge specific capacity (2 V to 3.1 V) ranges from 32.1 mAh/g to 36.1 mAh/g, the 1 C initial charge specific capacity (2 V to 3.75 V) ranges from 153.2 mAh/g to 161.7 mAh/g, and the 1 C initial discharge specific capacity (2 V to 3.1 V) ranges from 27.8 mAh/g to 32.2 mAh/g.

Comparing the examples with Comparative Example 1, it can be seen that the aluminum and trivalent titanium co-doped lithium iron phosphate cathode materials provided in the examples of the present application have higher discharge specific capacity and charge specific capacity, especially the discharge capacity in 2 V to 3.1 V. The aluminum and trivalent titanium co-doped lithium iron phosphate cathode materials provided in the examples of the present application have higher discharge capacity at the low voltage (2 V to 3.1 V), significantly improving the driving range of new energy vehicles in practical applications, allowing the vehicles to achieve a longer driving range even at a low state of charge. Moreover, the higher capacity at low voltage can effectively alleviate the electrochemical corrosion of the aluminum foil cathode current collector at low voltage. In Comparative Example 1, tetravalent titanium is used as the titanium source, which can easily lead to impurities in the cathode material. The particle radius of tetravalent titanium is smaller than that of trivalent titanium, easily causing tetravalent titanium to mixed arrange with lithium, resulting in capacity degradation.

Comparing the examples with Comparative Example 2, it can be seen that the aluminum and trivalent titanium co-doped lithium iron phosphate cathode materials provided in the examples of the present application have higher charge specific capacity and discharge specific capacity, especially the discharge specific capacity in 2 V to 3.1 V.

Combining the data from Tables 1 to 4, it can be seen that the carbon coated aluminum and trivalent titanium co-doped lithium iron phosphate cathode materials provided in the examples of the present application achieve both higher capacity and higher compaction density, resulting in higher charge specific capacity and discharge specific capacity at 0.2 C and 1 C rates. The 0.2 C initial charge specific capacities (2V to 3.1V) of Examples 8 and 9 are 156.7 mAh/g and 157.5 mAh/g, respectively, which are lower than that of Comparative Example 1. This is because the addition of titanium trichloride in Example 8 exceeds the specified range, resulting in a higher content of impurity phases, which reduces the integrity of the crystal structure of the lithium iron phosphate cathode material, leading to lower specific capacity. In Example 9, the addition of titanium trichloride is below the specified range, resulting in lower lithium-ion mobility, leading to lower capacity.

Comparing Examples 1, 4 to 7, and 8 to 9, it can be seen that in the preparation methods of the cathode materials provided in the examples of the present application, maintaining the ratio of amount of substance of titanium element in the titanium source, the reducing agent, lithium element in the first lithium source, and phosphorus element in the phosphorus source at 1:(0.1 to 0.2):(3.3 to 3.8):(2.1 to 2.5) is beneficial for the cathode material to have both high capacity and high compaction density.

Comparing Examples 1, 12 to 14, and 15 to 16, it can be seen that in the preparation methods of the cathode materials provided in the examples of the present application, maintaining the ratio of amount of substance of titanium element in the lithium titanium phosphate material, iron element in the iron source, lithium element in the second lithium source, and carbon element in the carbon source at 1:(5 to 10):(5.2 to 11):(2 to 6) is beneficial for the cathode material to have both high capacity and high compaction density.

It should be noted that the scope of the present application is not limited by the above implementations. The above implementations are only examples, and within the scopes of the technical solutions of the present application, any implementations having the compositions with substantially the same technical conceptions and achieving the same effects all fall within the technical scope of the present application. Furthermore, without departing from the main conception of the present application, various modifications that a person skilled in the art may conceive upon the implementations, as well as other embodiments constructed by combining part of composing elements of the implementations, are also included within the scope of the present application.

## Claims

1. A cathode material, comprising a first core particle and a first coating layer covering a surface of the first core particle, wherein the first core particle is represented by a chemical formula of LiₐFe_{b}TiAl_{c}(PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c).

2. The cathode material according to claim 1, wherein 8≤a≤14.5; and/or
a compaction density of the cathode material is in a range from 2.45 g/cm³ to 2.6 g/cm³; and/or
a mass percentage of the carbon layer in the cathode material is in a range from 0.7% to 2.3%.

3. A method for preparing a cathode material, comprising following steps:
subjecting a titanium source, a first lithium source, and a phosphorus source to a first reaction treatment to obtain a preliminary material;
subjecting the preliminary material and an aluminum source to a second reaction treatment to obtain a lithium titanium phosphate material;
subjecting the lithium titanium phosphate material, an iron source, a second lithium source, and a carbon source to a third reaction treatment to obtain the cathode material;
wherein a valence of titanium element in the titanium source is +3, the cathode material comprises a first core particle and a first coating layer covering a surface of the first core particle, the first core particle is represented by a chemical formula of LiₐFe_{b}TiAl_{c}(PO₄)_{d}, and the first coating layer is a carbon layer, wherein 7.5≤a≤14.5, 5≤b≤10, 0.1≤c≤0.2, a/3+1.02×(2/3b+1+c)≤d≤a/3+1.05×(2/3b+1+c).

4. The method according to claim 3, wherein the lithium titanium phosphate material comprises a second core particle and a second coating layer covering a surface of the second core particle, the second core particle is represented by a chemical formula of Li₃Ti(PO₄)₂, and the second coating layer comprises aluminum element.

5. The method according to claim 3, wherein in a mixture of the titanium source, the first lithium source, and the phosphorus source, a ratio of amount of substance of titanium element, lithium element, and phosphorus element is 1:(3.2 to 3.8):(2.1 to 2.5); and/or a ratio of amount of substance of titanium element in the preliminary material to aluminum element in the aluminum source is 1:(0.1 to 0.2); and/or
a ratio of amount of substance of titanium element in the lithium titanium phosphate material, iron element in the iron source, lithium element in the second lithium source, and carbon element in the carbon source is 1:(5 to 10):(5.2 to 11):(12 to 36); and/or
a temperature of the first reaction treatment is in a range from 200 °C to 350 °C; and/or
a pressure of the first reaction treatment is in a range from 10 MPa to 20 MPa; and/or
a time period of the first reaction treatment is in a range from 5 h to 15 h; and/or
the titanium source comprises titanium trichloride; and/or
the first lithium source comprises at least one of lithium hydroxide, lithium oxide, lithium dihydrogen phosphate, and lithium monohydrogen phosphate; and/or
the phosphorus source comprises at least one of lithium dihydrogen phosphate and lithium monohydrogen phosphate; and/or
the iron source comprises ferric phosphate; and/or
the second lithium source comprises at least one of lithium carbonate, lithium hydroxide, lithium oxalate, and lithium acetate.

6. The method according to claim 3, wherein subjecting the titanium source, the first lithium source, and the phosphorus source to the first reaction treatment further comprises adding a reducing agent;
wherein a ratio of amount of substance of the reducing agent to titanium element in the titanium source is (0.1 to 0.2):1; and/or
wherein the reducing agent comprises at least one of hydrazine hydrate, sodium sulfite, and hypophosphorous acid.

7. The method according to claim 3, wherein subjecting the preliminary material and the aluminum source to the second reaction treatment comprises following steps:
mixing the preliminary material, a dispersant, and the aluminum source to form a first slurry, and adjusting a pH value of the first slurry to 8 to 10;
subjecting the first slurry to solid-liquid separation to obtain a solid product;
subjecting the solid product to a first calcination treatment to obtain the lithium titanium phosphate material.

8. The method according to claim 3, wherein the step of subjecting the lithium titanium phosphate material, the iron source, the second lithium source, and the carbon source to the third reaction treatment to obtain the cathode material comprises following steps:
mixing the lithium titanium phosphate material, the iron source, the second lithium source, and the carbon source to form a second slurry;
grinding the second slurry until a particle size of particles in the second slurry ranges from 300 nm to 600 nm;
subjecting the second slurry to solid-liquid separation to obtain a mixed material;
subjecting the mixed material to a second calcination treatment to obtain the cathode material;
wherein a calcination temperature of the second calcination treatment is in a range from 700 °C to 850 °C; and/or
wherein a calcination time period of the second calcination treatment is in a range from 6 h to 15 h.

9. A cathode plate, comprising a current collector and an active layer disposed on a surface of the current collector, wherein the active layer comprises the cathode material according to any one of claims 1 to 2 or the cathode material prepared by the method according to any one of claims 3 to 8.

10. A secondary battery, comprising the cathode plate according to claim 9.
